# EUROPEAN PATENT APPLICATION

(11) **EP 2 076 096 A1**
(43) Date of publication of application: **01.07.2009**
(21) Application number: 07425824.5
(22) Date of filing: 24.12.2007
(51) Int. Cl.: H05B 33/08, F21S 8/00, H05B 35/00, F21K 7/00, H01J 61/96

(54) **Illumination device and process for adjusting the brightness of the light emitted by said illumination device**

(71) Applicant: Tecnolux Italia S.A.S. di Benito Tacconi e C., 20033 Desio (MI) (IT)
(72) Inventor: Tacconi, Bruno, 20033 Desio (Milano) (IT)
(74) Representative: Pesce, Michele

(57) **Abstract**

The illumination device (1) comprises a support (2) carrying at least a first and a second lamp (3, 4). The second lamp (4) is of the type the light intensity of which can be adjusted by adjusting the electrical feed but which, following adjustment, the emitted light does not change colour. The first lamp (3) is fed with a fixed power while the second lamp (4) is fed with an adjustable power. The process consists of feeding the first lamp (3) at fixed power to cause it to emit light of a predetermined first colour, and feeding the second lamp (4) at a power which can be adjusted, to cause it to emit light of adjustable intensity and of a predetermined second colour different from the first colour. The colour of the resultant light varies in relation to the percentage of light from the second lamp present in the light mixture emitted by the illumination device.

## Description

The present invention relates to an illumination device and to a process for adjusting the brightness of the light emitted by said illumination device.

When illumination devices of adjustable light brightness are required, illumination devices with halogen lamps are often used, presenting the characteristic of being able to be "halved" or adjusted; in practice the brightness emitted by these lamps is varied by adjusting the electrical feed.

However when these lamps (which are incandescent lamps) are adjusted, not only is their brightness modified but also the colour of their emitted light.

In practice, when these are fed with "low" power they emit a light which tends to red, whereas when fed with "high" power they emit a light which tends to white, moving along the "black body" line.

In addition, halogen lamps consume considerable energy (precisely because they pertain to the incandescent lamp family).

The current market tendency is to replace incandescent lamps in general, and halogen lamps in particular, with fluorescent lamps (either cold cathode or hot cathode) or electroluminescent diodes (LEDs), which consume much less energy for equal transmitted light.

Fluorescent lamps or electroluminescent diodes (LEDs) are adjustable, i.e. their brightness can be adjusted by suitably adjusting their electrical feed.

However, although the lamp brightness can be adjusted by adjusting the electrical feed, the colour of the light emitted by the lamp remains substantially unaltered.

Hence in practice, if a lamp emits white light, the light always remains white during brightness adjustment (for example in passing from maximum brightness to a lower brightness).

This is a very unwelcome effect for those consumers used to a light which changes colour during adjustment, by passing from a cold white light at high lamp brightness and feed power, to a warm red light at low lamp brightness and feed power.

The technical aim of the present invention is therefore to provide an illumination device and a process for adjusting the brightness of the light emitted by said illumination device, by which the stated technical drawbacks of the known art are eliminated.

Within the scope of this technical aim, an object of the invention is to provide an illumination device provided with fluorescent lamps or electroluminescent diodes (LEDs) which is adjustable such that on varying the brightness emitted by the device (the fluorescent lamp and electroluminescent diode (LED) with which the device is provided), the colour of the emitted light also varies.

In particular, according to the invention, when the illumination device operates at low brightness the emitted light tends to red, whereas when it operates at high brightness the emitted light tends to white, so imitating the movement along the "black body" line typical of incandescent lamps.

Another object of the invention is to provide a device of low energy consumption.

The technical aim, together with these and other objects, are attained according to the present invention by an illumination device and process in accordance with the accompanying claims.

Further characteristics and advantages of the invention will be more apparent from the description of a preferred but non-exclusive embodiment of the device and process of the invention, illustrated by way of non-limiting example in the accompanying drawings, in which:
Figure 1 shows a C.I.E. diagram representative of the colours obtainable by combining two or more light sources;

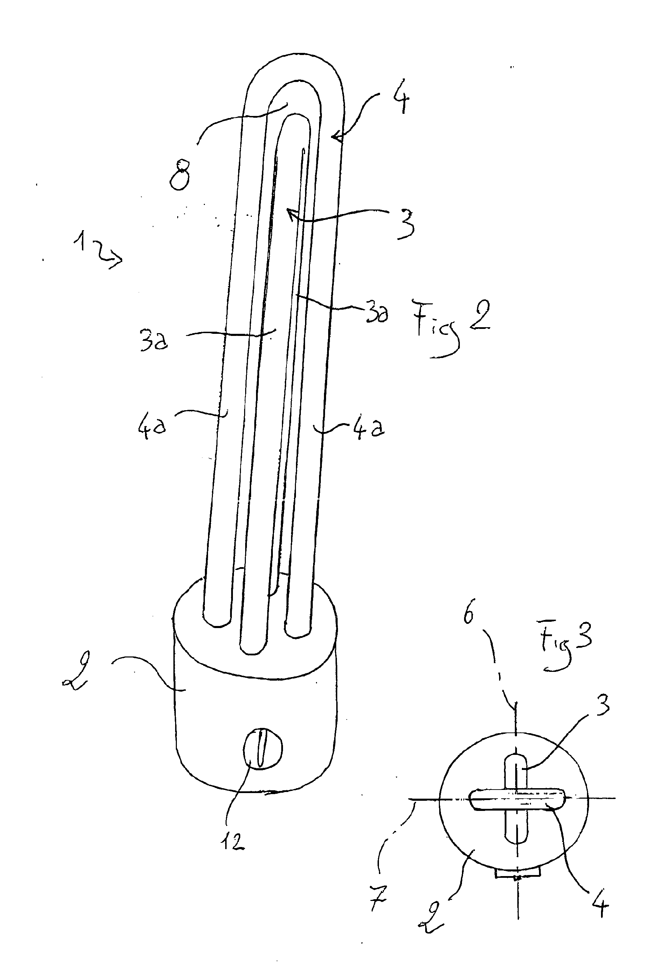

Figure 2 is a schematic view of the illumination device of the invention;
Figure 3 is a view of the device of Figure 3 taken from above;

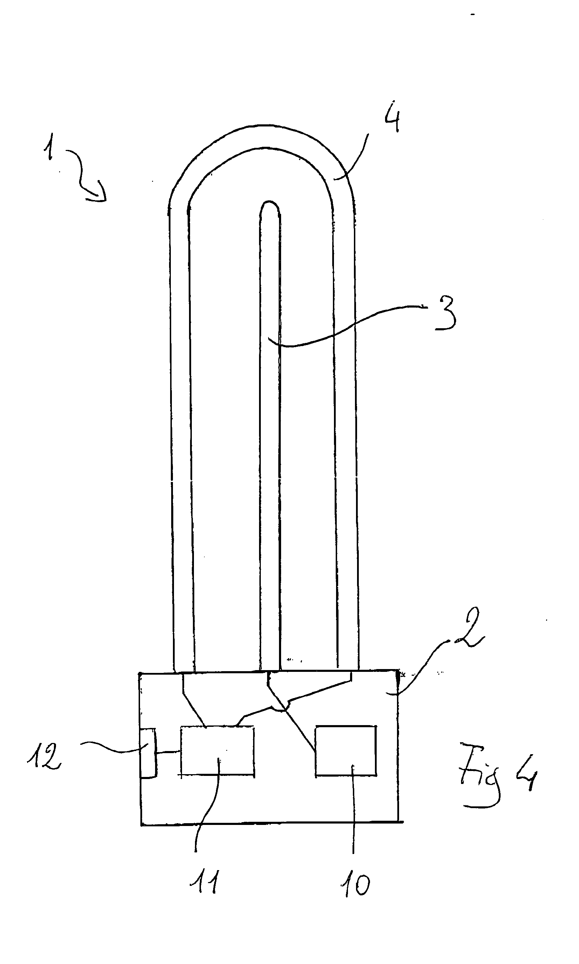

Figure 4 is a schematic view of the device of the invention; and
Figure 5 shows a different embodiment of the device of the invention.

The illumination device of the invention is indicated overall by the reference numeral 1 and comprises a support 2 carrying a first and a second lamp 3, 4.

Although the illustrated embodiment refers to only two lamps, different embodiments of the device 1 can be provided with any number of lamps greater than two.

At least the adjustable lamp 4 is of the type the light intensity of which can be adjusted by varying the electrical feed but for which, as a result of adjustment, the emitted light does not change colour; preferably the lamps 3 and 4 are of the same type, i.e. are both of cold cathode fluorescent type, however in other embodiments they can be of hot cathode fluorescent or electroluminescent diode (LED) type, or in a further embodiment, the lamp 3, in this case non-adjustable, can be of incandescent type.

In the present embodiment each lamp 3, 4 is in the form of a U-bent tube, one with longer arms 4a and the other with shorter arms 3a.

The two lamps 3, 4 are positioned such that the planes 6, 7 in which they lie are mutually perpendicular, with the lamp 3 (having shorter arms 3a and lying in the plane 6) inserted into the compartment 8 of the lamp 4, and the lamp 4 (having longer arms 4a and lying in the plane 7) being positioned symmetrically about the plane 6 containing the lamp 3.

The lamp 3 is fed with a fixed power while the lamp 4 is fed with a power adjustable between a minimum value and a maximum value.

Hence the lamp 3 emits light with constant intensity and having a determined colour temperature (the light thus being of predetermined colour, which does not change with time).

The lamp 3 operates by emitting light at a colour temperature typically chosen within the temperature range of 1700-2100 K (absolute degrees or kelvin) and preferably 1800 K.

In the same manner, although the lamp 4 is fed with an adjustable electrical power and emits light of intensity variable between a minimum value and a maximum value, this also emits light which, for all power and light intensity conditions, always emits a predetermined colour different from that of the light emitted by the lamp 3 and which does not change with time.

The lamp 4 operates at a colour temperature higher than that of the lamp 3; this colour temperature is for example less than 4000 K and is preferably 3000 K.

The colour emitted by the illumination device overall is the combination of the light emitted by the two lamps 3, 4 as will be more apparent hereinafter.

The illumination device is provided with two converters 10,11 (each converter powering one of the lamps 3, 4), the converter 11 which powers the lamp 4 (adjustable) also being connected to a dimmer switch 12 of known type which enables the electrical power feeding the lamp 4 to be adjusted.

Hence the lamp 4, the feed power of which is adjusted, operates with a feed power higher than that of the lamp 3 and with a higher colour temperature.

The operation of the illumination device of the invention is apparent from that described and illustrated, and is substantially as follows.

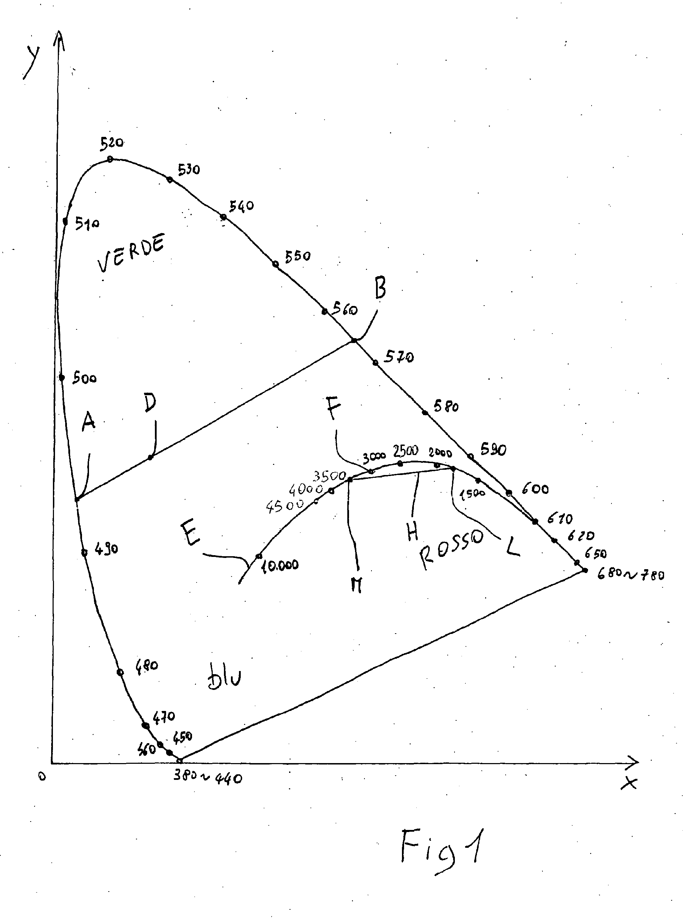

Reference will be made to Figure 1, which shows a C.I.E. diagram.

A C.I.E. diagram is known to consist of a bell-shaped figure enclosing all possible colours of light.

The saturated colours, i.e. those corresponding to visible light wavelengths, are shown along the perimetral line.

As white is a mixture of different spaced-apart wavelengths, the colours on the perimetral line are those most distant from white, which is located in the middle.

As shown, the upper part of the curve encloses the green region, the lower left the blue region and the lower right the red region.

Finally the straight line lowerly bounding the curve represents the various possible mixtures of the chromatic colours blue and red.

When two pure colours are mixed, all possible resultant colours are represented on this diagram by the segment joining the points indicating the constituent colours of the mixture.

For example, on mixing the colours A and B all colours obtainable by variously combining them (i.e. increasing the percentage of colour A or colour B in the mixture) are represented by the segment AB.

In other words, if a mixture is formed with 25% of colour A and 75% of colour B, the resultant colour is defined by the point D intermediate between AB.

Within the bell curve the black body or Plank curve E is shown (in function of the absolute or kelvin temperature); this indicates the colour of the light emitted by a body heated to the stated temperature.

Hence, on heating a body to a temperature of 3000 K it emits a light of colour defined by the point F of curve E.

Hereinafter it will be assumed that the lamp 3 operates at a fixed colour temperature of 1800 K, while the lamp 4 operates at a colour temperature of 3000 K.

In this case all colours which the illumination device is able to emit are defined by the segment H which defines at its end L the case of light emitted only by the lamp 3, and at the point M the case of light emitted only by the lamp 4.

When the lamp 4 is adjusted its colour does not change (obviously neither does the colour of the lamp 3), however the percentage of light emitted by the lamp 4 in the light mixture emitted by the illumination device varies.

In this respect, as the lamp 3 is fed at constant power, by increasing or decreasing the power fed to the lamp 4 the percentage of light emitted by the lamp 4 in the mixture changes.

The result is that even if the lamp 3 emits light of always the same colour tending to red, and the lamp 4 emits light of always the same colour tending to white, the mixture light colour varies between the two ends L and M and is close to the point L (i.e. with light tending to red) for low feed power to the lamp 4 (as the percentage of white light emitted by the lamp 4 is low in the light mixture), while for a high feed power to the lamp 4 the mixture light tends to white (as the percentage of white light emitted by the lamp 4 is high in the light mixture).

In this manner, although the cold or hot cathode fluorescent lamps or electroluminescent diodes (LEDs) emit light of different intensity but of always the same colour after adjustment, the illumination device which uses them is able to adjust the light intensity in such a manner that the light colour changes during this adjustment.

Comparing the curve along which the halogen lamp operates (consisting of the curve portion E between points M and L) and the segment H along which the illumination device of the present invention operates, it can be seen that the illumination device of the invention is able to simulate the behaviour of a halogen lamp operating within a temperature range between 1800 K and 3000 K.

Moreover advantageously, as the adjusted lamp is the lamp 4 which operates at higher power than the lamp 3 (hence having a higher power consumption than the lamp 3), the device is able to limit consumption when lower intensity light is to be obtained; in this case, it is in fact the intensity of the higher consuming light which is decreased, whereas the intensity of the lower consuming light remains constant.

In a different embodiment, the device comprises an enclosure at least partially surrounding the first and second lamp 3, 4. In this embodiment the support can also be absent.

Advantageously the device of this embodiment can be inserted into recesses in false ceilings.

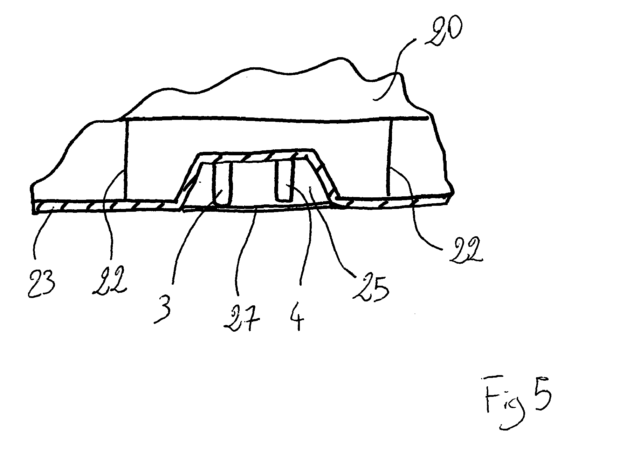

Figure 5 shows a ceiling 20 to which a false ceiling 23 is fixed by supports 22.

The false ceiling 23 presents a recess 25 into which the first lamp 3 and the second lamp 4 are inserted; these can be mounted on a common support or can be fixed on independent supports.

The recess 25 is closed by a glass plate or the like 27; the recess 25 together with the glass plate 27 defines an enclosure which contains the first and second lamp (in this case completely).

Hence the enclosure can consist of a suitable element enclosing the lamps, or a structural element forming part of the room in which the device (with lamps) is to be positioned.

The present invention also relates to a process for adjusting the brightness of an illumination device presenting at least two lamps where at least one lamp is of the type in which the light intensity can be adjusted by adjusting the electrical feed but for which, following adjustment, the emitted light does not change colour; the lamps are preferably of the same type, i.e. both of cold cathode fluorescent type, however, in other embodiments, they can be of hot cathode fluorescent or electroluminescent diode (LED) type.

The process consists of powering a first fluorescent lamp or electroluminescent diode (LED) at fixed power and powering a second fluorescent lamp or electroluminescent diode (LED) at a power which can be adjusted.

In this respect, the first fluorescent lamp or electroluminescent diode (LED) is fed at fixed power, making it emit light of predetermined colour (it hence operating at a first lower colour temperature), while the second lamp is fed at a power which can be adjusted between a minimum and maximum value, making it emit light of intensity variable between a minimum and a maximum value, but of a second colour which does not change as a result of the adjustment (it operating at a second higher colour temperature) and is different from the colour emitted by the first lamp or electroluminescent diode (LED).

In this manner the colour of the resultant light, which depends on the percentage of light of the first and of the second lamp or electroluminescent diode (LED) present in the light mixture emitted by the illumination device, varies as the light intensity emitted by the second lamp varies.

Preferably the adjustable power lamp is adjusted between feed power values which are higher than those of the fixed lamp.

Advantageously the device and process of the invention enable the intensity and colour to be modified by a single adjustment carried out on the lamp of greater energy consumption and power.

The device and process conceived in this manner are susceptible to numerous modifications and variants, all falling within the scope of the inventive concept; moreover all details can be replaced by technically equivalent elements.

In practice the materials used and the dimensions can be varied at will according to requirements and to the state of the art.

## Claims

1. An illumination device (1) comprising at least a first and a second lamp (3, 4), **characterised in that** said first lamp (3) is fed with a fixed power while said second lamp (4) is fed with an adjustable power, at least the second lamp (4) being of the type the light intensity of which can be adjusted by adjusting the electrical feed but which, following adjustment, the emitted light does not change colour.

2. A device (1) as claimed in claim 1, **characterised by** comprising a support (2) carrying said at least a first and a second lamp (3, 4).

3. A device (1) as claimed in one or more of the preceding claims, **characterised by** comprising an enclosure at least partially containing said first and second lamp (3, 4).

4. A device (1) as claimed in one or more of the preceding claims, **characterised in that** said first and second lamp (3, 4) are of the same type, the second lamp (4) having a feed power greater than or equal to that of the first lamp (3).

5. A device (1) as claimed in one or more of the preceding claims, **characterised in that** said first lamp (3) operates within a colour temperature range between 1700-2100 K and preferably at 1800 K, while the second lamp (4) operates within a colour temperature range below 4000 K and preferably at 3000 K.

6. A device (1) as claimed in one or more of the preceding claims, **characterised in that** said first and said second lamp (3, 4) are cold cathode fluorescent lamps or hot cathode fluorescent lamps or electroluminescent diodes (LEDs).

7. A device (1) as claimed in one or more of the preceding claims, **characterised in that** each lamp (3, 4) consists of a U-bent tube, one lamp (4) presenting longer arms (4a) and the other lamp (3) presenting shorter arms (3a).

8. A device (1) as claimed in one or more of the preceding claims, **characterised in that** said lamps (3, 4) are disposed such that the planes (6, 7) in which they lie are mutually perpendicular, the lamp (3) of shorter arms (3a) and lying in a first plane (6) being inserted into a compartment (8) of the lamp (4) having longer arms (4a), and the lamp (4) of longer arms (4a) and lying in a second plane (7) being positioned symmetrically about the plane (6) containing the lamp (3).

9. A device (1) as claimed in one or more of the preceding claims, **characterised by** being provided with two converters (10, 11), each converter powering one of the lamps (3, 4), the converter (11) which powers the adjustable lamp (4) being connected to a dimmer switch (12) which enables the electrical power feeding the lamp (4) to be adjusted.

10. An illumination device (1), **characterised by** comprising a support (2) provided with at least a first and a second converter (10, 11), the first converter (10) being connectable to a first lamp and the second converter (11) being connectable to a second lamp of the type the light intensity of which can be adjusted by varying the electrical feed but for which, as a result of adjustment, the emitted light does not change colour, said second converter (11) being connected to a dimmer switch (12) which allows adjustment of the electrical power provided by said second converter (11) to the lamp (4) connectable to it.

11. A process for adjusting the brightness of an illumination device (1) presenting at least a first and a second lamp (3, 4), where at least the second lamp (4) is of the type in which the light intensity can be adjusted by adjusting the electrical feed but for which, following adjustment, the emitted light does not change colour, **characterised by** consisting of feeding the first lamp (3) at fixed power to make it emit light of a predetermined first colour, and feeding the second lamp (4) at a power which can be adjusted, to make it emit light of adjustable intensity and of a predetermined second colour different from the first colour and which does not change as a result of the adjustment, such that the colour of the light resulting from the combination of the light emitted by the first and by the second lamp (3, 4) varies in relation to the percentage of light emitted by the second lamp (4) present in the light mixture emitted by the illumination device (1).

12. A process as claimed in claim 9, **characterised in that** the first and second lamp (3, 4) are of the same type, the second lamp (4) of adjustable feed power having a feed power greater than or equal to that of the first lamp (3) of fixed feed power.

13. A process as claimed in claim 9, **characterised in that** said first and second lamp (3, 4) are cold cathode fluorescent lamps or hot cathode fluorescent lamps or electroluminescent diodes (LEDs).
